# EUROPÄISCHE PATENTSCHRIFT

(11) **EP 1 693 593 B1**
(45) Veröffentlichungstag und Bekanntmachung des Hinweises auf die Patenterteilung: **17.09.2008**
(21) Anmeldenummer: 06002889.1
(22) Anmeldetag: 14.02.2006
(51) Int. Cl.: F16F 7/108

(54) **Einstellbarer Drei-Achsen Tilger**
Adjustable three-axis dynamic damper
Amortisseur dynamique triaxial et réglable

(30) Priorität: 22.02.2005 EP 05003741
(43) Veröffentlichungstag der Anmeldung: 23.08.2006
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- EP-A- 1 286 076
- WO-A-90/07673

## Beschreibung

Die Erfindung betrifft einen Schwingungstilger auf Basis von Elastomerteilen, welcher Schwingungen, die von Maschinen oder Bauteilen jeglicher Art erzeugt werden, in allen drei Richtungen (x, y, z) zu reduzieren oder zu kompensieren vermag. Der erfindungsgemäße Drei-Achsen Tilger kann entsprechend den Eigenschaften des Schwingungen erzeugenden Systems stufenlos und bezüglich der Richtung unterschiedlich und voneinander unabhängig eingestellt und somit an das erzeugte Schwingungssystem in einfacher Weise, gegebenenfalls auch vor Ort, angepasst werden.

Die theoretischen Grundlagen eines Schwingungstilgers sind prinzipiell bekannt und sind in der einschlägigen Literatur zur Schwingungslehre umfassend dargestellt. Das Prinzip des Schwingungstilger wird seit langer Zeit auch technisch genutzt, so z.B. in der Form des Turmtilgers oder des Torsionstilgers im Motorbau und in jüngster Zeit für den Betrieb von Windkraftanlagen.

Schwingungstilger müssen auf die Frequenz des zu tilgenden Bauteiles abgestimmt werden. Die Abstimmung der Tilgerfrequenz kann zum einen durch die Änderung der Steifigkeit der eingesetzten Federelemente, zum anderen durch Änderung der Tilgermasse erfolgen. Da die Tilgermasse eine für die Tilgung des Systems festgelegte Mindestmasse nicht unterschreiten sollte und größere Massen unnötig Platz erfordern und Kosten verursachen, bleibt für die Einstellung der Tilgerfrequenz die Variation der Federsteifigkeit. Ein weiteres Problem ist sehr häufig, dass die auftretenden Schwingungen richtungsabhängig sind, d.h.. in Bezug auf die x-, y- und z- Richtung eines gedachten Koordinatensystems, in dem sich das zu dämpfende Schwingungssystem befindet, unterschiedlich stark sein können.
Dies kann durch die Auswahl und Kombination auch bezüglich der Richtung unterschiedlich steifer Federelemente erfolgen. In der Regel ist dies mit einem hohem Aufwand verbunden, für jede zu tilgende Frequenz ggf. in x-, y- und z-Richtung ein passendes Federelement zu entwerfen beziehungsweise zu entwickeln oder aus einer vorhandenen Sammlung auszuwählen und jeden Tilger für eine ganz bestimmte Tilgerfrequenz zu montieren..

Aus der EP 1 286 076 ist ein Elastomertilger bekannt, welcher auftretende Schwingungsfrequenzen in einer bevorzugten Richtung, entweder als Axial-Tilger oder als Radial-Tilger zu dämpfen vermag. Bei diesem Lineartilger ist ein Befestigungselement (Tilgerträger) über eine Elastomerschicht mit zwei getrennten Tilgermassen-Elementen verbunden, wobei die Flächen mit denen die Elastomerschicht mit den Tilgermassen und dem Befestigungselement in Kontakt steht, konusförmig oder sphärisch ausgebildet sind. Der Konuswinkel ist dabei entweder flach oder steil, wirkt also entweder als Axial- oder als Radial-Tilger. Durch entsprechende Spannmittel, welche die beiden Tilgermassen-Elemente gegeneinander verspannt, kann die Steifigkeit der Elastomerschicht individuell eingestellt werden, wodurch sich das Dämpfungsverhalten bezüglich einer einzigen ausgewählten Richtung entsprechend ändert.
Gemäß der EP 1 286 076 können derartige Tilgerelemente im Stapel eingesetzt werden, wobei auch Linearatilger unterschiedlicher Richtung (Axial-, und Radialtilger) in einem Stapel angeordnet werden können. Ein solches Stapelsystem ist aber insbesondere in Bezug auf seine eingeschränkte Handhabbarkeit und individuelle Einstellbarkeit vor allem vor Ort von geringem Nutzen, um in mehr als einer Richtung Schwingungen des Systems zu tilgen. Überdies haben sich derartige Stapeltilger, welche einzelne lineare Axial- und Radial- Tilger aufweisen, in der Praxis als nicht so effektiv wie erhofft erwiesen und können nur in passenden ausgewählten, mit ausreichendem Platz versehenen Systemen mit weniger anspruchsvollen Schwingungscharakteristika erfolgreich eingesetzt werden.

Es bestand somit die Aufgabe, einen verbesserten individuell einstellbaren und gut handhabbaren Schwingungstilger zur Verfügung zu stellen, welcher in der Lage ist, durch Bewegung von Bauteilen erzeugte Schwingungskräfte bzw. daraus resultierende Frequenzen inklusive Eigenfrequenzen, die in allen drei Raumkoordinaten (x, y, z) wirken, zu reduzieren bzw. zu eliminieren.

Diese Aufgabe wurde durch den erfindungsgemäßen Drei-Achsen Tilger gelöst. Ein solcher Tilger ist insbesondere für Systeme mit komplexen Schwingungsverhalten geeignet. Der erfindungsgemäße Tilger zeichnet sich neben einer erhöhten Effektivität vor allem, bedingt durch seine Konstruktion, durch eine sehr einfache und exakte Einstellung der in unterschiedlichen Richtungen wirkenden Steifigkeiten der elastomeren Dämpfungselemente aus. Überdies ermöglicht die besondere Tilgerkonstruktion eine Modulbauweise und -Anwendung der einzelnen Elemente des erfindungsgemäßen Tilgers, welche einen äußerst variablen und damit auch ökonomisch vorteilhaften Einsatz ermöglichen.

Gegenstand der Erfindung ist somit
- Ein Tilger mit variabler, einstellbarer, in unterschiedlichen Richtungen wirkender Federsteifigkeit zum Reduzieren oder zur Beseitigung von durch Maschinen oder Bauteilen erzeugten Schwingungen, im wesentlichen bestehend aus einem Dämpfungselement auf Basis eines Elastomers und einer Tilgermasse, wobei das Dämpfungselement (1) sich im wesentlichen zusammensetzt aus:
   (i) einem oberen, scheibenförmigen elastomeren Lagerelement (7), welches aus einem inneren konusförmigen Teil (18) und einem äußeren hierzu passenden konusförmigen Teil (17) besteht, die zueinander eine gemeinsame konusförmige Begrenzungsfläche aufweisen, über welche sie mittels einer entsprechend geformte Elastomerschicht (19) miteinander fest verbunden sind, wobei der innere Teil (18) eine zentrale axiale Bohrung (8a) aufweist, und der Konuswinkel, der von der konusförmigen Begrenzungsfläche und der längeren Basis des inneren Teils gebildet wird, maximal 60° beträgt.
   (ii) einem unteren, scheibenförmigen elastomeren Lagerelement (5), welches aus einem inneren konusförmigen Teil (12) und einem äußeren hierzu passenden konusförmigen Teil (11) besteht, die zueinander eine gemeinsame konusförmige Begrenzungsfläche aufweisen, über welche sie mittels einer entsprechend geformte Elastomerschicht (13) miteinander fest verbunden sind, wobei der innere Teil (12) eine zentrale axiale Bohrung (8b) aufweist, und der Konuswinkel, der von der konusförmigen Begrenzungsfläche und der längeren Basis des inneren Teils gebildet wird, maximal 60° beträgt;
   (iii) mindestens einem mittleren, scheibenförmigen elastomeren Lagerelement (6), welches zwischen dem oberen und dem unteren Lagerelement platziert ist und aus einem inneren konusförmigen Teil (15) und einem äußeren hierzu passenden konusförmigen Teil (14) besteht, die zueinander eine gemeinsame konusförmige Begrenzungsfläche aufweisen, über welche sie mittels einer entsprechend geformten Elastomerschicht (16) miteinander fest verbunden sind, wobei der innere Teil (15) eine zentrale axiale Bohrung (8c) aufweist, und der Konuswinkel, der von der konusförmigen Begrenzungsfläche und der längeren Basis des inneren Teils gebildet wird, mindestens 65° beträgt; und
   (iv) scheibenförmigen Abstandselementen (20), welche ebenfalls eine zentrale axiale Bohrung (8d) aufweisen und zwischen den elastomeren Lagerelementen (7), (5) und (6) angeordnet sind;
wobei die Lagerelemente (5), (6) und (7) Bohrungen (25) zur Aufnahme von Spannmitteln (23) zur Verspannung der äußeren Lagerelemente (5) und (7) sowie Bohrungen (26), (27) zur Aufnahme von Spannmitteln (22), (24) zur Verspannung des oder der mittleren Lagerelemente(s) (6) aufweisen, und zusammen mit den Abstandselementen (20) so angeordnet sind, dass ihre zentralen Bohrungen (8a, b, c, d) eine einheitliche axiale Bohrung (8) bilden zur Aufnahme eines Befestigungsmittels (10) zur Anbringung des Dämpfungselementes (1) an das zu dämpfende Bauteil bzw. Maschinenelement.
- Ein entsprechender Tilger, bei dem die Konusse des oberen und unteren Lagerelementes (5, 7) einen Winkel von 10 - 60°, vorzugsweise maximal 50°, insbesondere hierbei 30 - 50° aufweisen.
- Ein entsprechender Tilger, bei dem der Konus des mittleren Lagerelementes (6) einen Winkel von 65 - 90°, vorzugsweise mindestens 70° aufweist, insbesondere hierbei 70 - 80° aufweist.
- Ein entsprechender Tilger, bei welchem das Dämpfungselement (1) ein mittleres Lagerelement (6) aufweist und die beiden äußeren Lagerelemente (5, 7) durch die in den Bohrungen (25) befindlichen Spannmittel (23) gegeneinander verspannt werden, und das mittlere Lagerelemente (6) durch die in den Bohrungen (26) und (27) befindlichen Spannmittel (22) und / oder (24) gegenüber einem und / oder beiden äußeren Lagerelementen (5, 7) mit verspannt wird.
- Ein entsprechender Tilger, bei dem das Dämpfungselement (1) zwei mittlere Lagerelemente (6, 6a) aufweist.
- Ein entsprechender Tilger, bei dem die beiden äußeren Lagerelemente (5, 7) durch die in den Bohrungen (25) befindlichen Spannmittel (23) und die beiden mittleren Lagerelemente (6, 6a) durch die in den Bohrungen (26) befindlichen Spannmittel (22) jeweils gegeneinander verspannt werden.
- Ein entsprechender Tilger, bei dem die Konusse der mittleren Lagerelemente (6, 6a) in X-Form und / oder die Konusse der beiden äußeren Lagerelemente (5, 7) in O-Form zueinander angeordnet sind.
- Ein entsprechender Tilger, bei dem die Konuselemente (11, 12, 14, 15, 17, 18) der Lagerelemente Rotationskegel oder Rotationsellipsoide sind.
- Ein entsprechender Tilger, bei welchem die Elastomerschichten in den Lagerelementen (5, 6, 7) unterschiedliche Härte haben.
- Ein entsprechender Tilger, bei welchem das Dämpfungselement (1) ein mit einer entsprechenden zentralen Bohrung versehenes Distanzelement (21) aufweist, über die das Dämpfungselement mit dem zu dämpfenden Maschinenelement verbunden ist.
- Ein entsprechender Tilger, welcher eine Massen-Trägerplatte (2) aufweist, die an eines der beiden Lagerelemente (5, 7) befestigt ist, und an welcher eine oder mehrere Tilgermassenelemente (3) mittels Befestigungsmitteln (4) angebracht sind.
- Alternativ ein entsprechender Tilger, bei dem die Lagerelement-Teile (11, 14, 17) so ausgelegt sind, dass sie selbst die Funktion einer Tilgermasse übernehmen.
- Ein entsprechender Tilger, bei dem alle Teile des Dämpfungselementes (1) und Tilgermasse (2) in Modulbauweise konzipiert sind, die es ermöglicht, die Dämpfungseigenschaften des Tilgers individuell einzustellen.
- Die Verwendung des erfindungsgemäßen oben und unten beschriebenen Tilgers zur Dämpfung von in drei Raumachsen auftretenden Schwingungen in Maschinen.

Im folgenden werden die in der Beschreibung und den Ansprüchen verwendeten Bezugsgrößen näher erläutert:

| *Nr.* | *Bezeichnung* |
|---|---|
| 1 | Dämpfungselement |
| 2 | Masse -Trägerplatte |
| 3 | Tilgermassemassenelemente |
| 4 | Befestigungsschrauben für Tilgermassen |
| 5 | Lagerelement unten (flacher Konus) |
| 6 | Lagerelement Mitte (steiler Konus) |
| 6a | Lagerelement Mitte (steiler Konus) bei insgesamt zwei mittleren Lagerelementen |
| 7 | Lagerelement oben (flacher Konus) |
| 8 | Zentrale Bohrung des Dämpfungselements (1) |
| 8a-e | Zentralen Bohrungen der Teile (5), (6), (7), (20), (21) |
| 10 | Befestigungsmittel für Dämpfungselement (1) |
| 11 | Außenteil des Lagerelementes (5) |
| 12 | Innenteil des Lagerelementes (5) |
| 13 | Elastomerteil des Lagerelementes (5) |
| 14 | Außenteil des Lagerelementes (6) |
| 15 | Innenteil des Lagerelementes (6) |
| 16 | Elastomerteil des Lagerelementes (6) |
| 17 | Außenteil des Lagerelementes (7) |
| 18 | Innenteil des Lagerelementes (7) |
| 19 | Elastomerteil des Lagerelementes (7) |
| 20 | Abstandselement |
| 21 | Distanzteil |
| 22 | Spannschraube für Lagerelement (6) |
| 23 | Spannschraube für Lagerelemente (5, 7) |
| 24 | Gegen- Klemmschraube für Lagerelement (6) |
| 25 | Bohrung für Spannelement (23) |
| 26 | Bohrung für Spannelement für Lagerelement (6) |
| 27 | Bohrung für Gegen- Klemmelement für Lagerelement (6) |

Im folgenden werden die Abbildungen näher beschrieben:

| Fig. | Bezeichnung |
|---|---|
| 1 | 3-D Schnitt durch erfindungsgemäßen Tilger |
| 2 | 3-D Schnitt durch erfindungsgemäßes Dämpfungselement (1) mit einem mittleren Lagerelement (6) |
| 3 | 3-D Schnitt durch erfindungsgemäßes Dämpfungselement (1) mit einem mittleren Lagerelement (6) |
| 4 | 3-D Schnitt durch erfindungsgemäßes Dämpfungselement (1) mit zwei mittleren Lagerelementen (6, 6a) |

### Nachfolgend wird der erfindungsgemäße Tilger im Detail beschrieben:

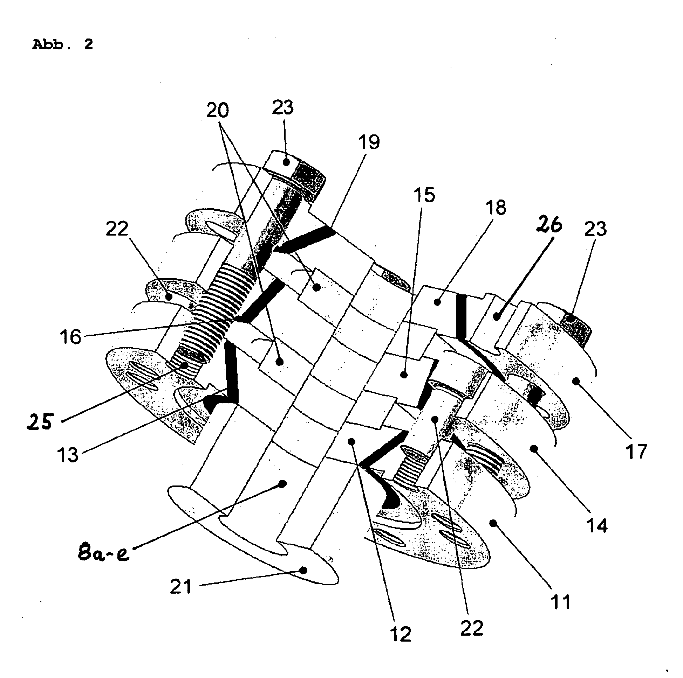

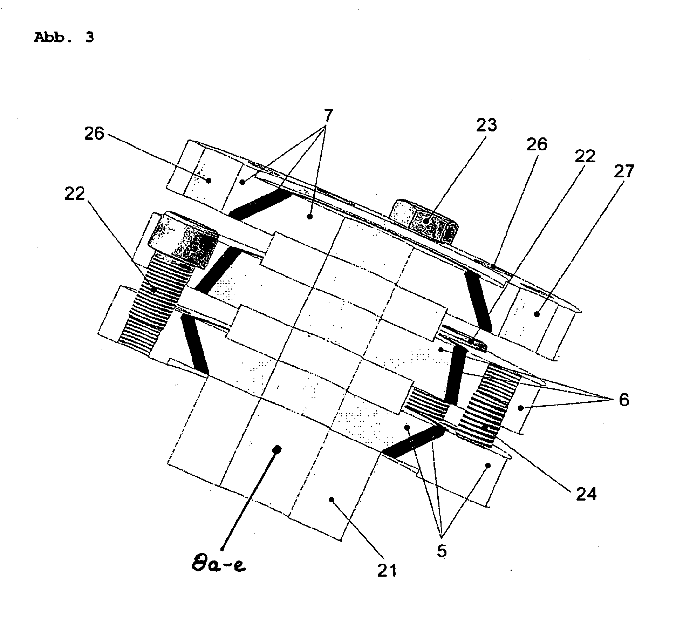

Der Tilger umfasst das erfindungsgemäße Dämpfungselement (1), welches wie folgt aufgebaut ist und funktioniert (Fig. 2, 3, und 4):
Das Dämpfungsteil (1) besteht im wesentlichen aus mehreren scheibenförmigen Lagerelementen. Neben dem oberen Lagerelement (7) und dem unteren Lagerelement (5) enthält es mindestens noch ein mittiges Lagerelement (6). Üblicherweise weist das Dämpfungselement (1) ein bis drei mittlere Lagerelemente (6) auf, vorzugsweise aber ein (6) oder zwei (6a). Die Ausführung mit insgesamt drei Lagerelementen (5, 6, 7) wird ist in den Abbildungen 2 und 3 genauer dargestellt.

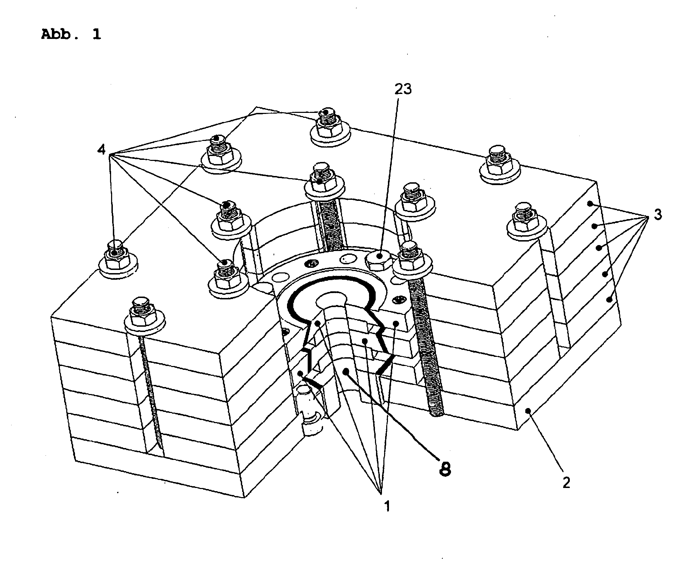

Das Dämpfungselement (1) als Ganzes wird entweder direkt oder mittels des Distanzteils (21) auf der zu beruhigende, bzw. zu dämpfende Maschine befestigt. In einer bevorzugten Ausführungsform der Erfindung ist eine Massenträgerplatte (2) an das Dämpfungsteil angebracht. Praktischerweise wird es an dem oberen (7) oder unteren (5) Lagerelement, vorzugsweise aber an dem unteren Lagerelement (5) befestigt, bzw. angeschraubt, in vorteilhafter Weise an deren äußeren Teilen (11) und (17). Die Massenträgerplatte hat die Aufgabe die Tilgemassenelemente (3) zu tragen und ist mit diesen durch die Befestigungsmittel (4) fest verbunden, vorzugsweise verschraubt. Die Tilgermasse kann entweder aus einem Element bestehen, vorzugsweise aber wegen der feineren Abstimmungsmöglichkeit in Form von einzelnen scheibenförmigen Massenelementen (3) vorliegen. Abbildung 1 gibt einen kompletten erfindungsgemäßen Tilger mit dreiteiligem Dämpfungselement (1) und mehreren Tilgermassenelementen (3) wieder.

Alternativ zu der Ausführungsform mit den zusätzlichen Tilgermassen gemäß Fig. 1, kann auch die Dämpfungseinheit (1) bzw. insbesondere jedes der Lagerelemente (5, 6, 7) selbst als Tilgermasse dienen, wenn sie bezüglich ihres Gewichtes und ihrer räumlichen Ausdehnung hierzu befähigt sind. In diesem Fall kann auf die Trägerplatte (2) und die Befestigungsvorrichtung (4) verzichtet werden.

Das Dämpfungsteil (1) kann, wie bereits gesagt, erfindungsgemäß ein Distanzteil (21) aufweisen, welches auf der Unterseite des unteren Lagerelementes (5) des Dämpfungsteils (1) angebracht ist. Hierdurch wird eine größere Flexibilität in Bezug auf die Platzerfordernisse beim Montieren des erfindungsgemäßen Tilgers erreicht. Das weiter unten näher beschriebene Dämpfungsteil (1) sowie das Distanzteil (21) besitzen eine deckungsgleiche zentrale Bohrung (8) zur Aufnahme eines Befestigungsmittels (10), beispielsweise eine Schraube oder ein Schraubbolzen. Damit kann der Tilger mit der Maschine oder einem entsprechenden Maschinenelement fest verbunden werden und die von der Maschine ausgehenden Schwingungen dämpfen bzw. eliminieren.

Das Dämpfungselement (1) selbst besteht aus dem unteren scheibenförmigen Lagerelement (5), mindestens einem mittleren scheibenförmigen Lagerelement (6) und dem oberen abschließenden Lagerelement (7), wobei zwischen den einzelnen Lagerelementen vorzugsweise scheibenförmige Abstandselemente (20) angebracht sind, die hauptsächlich für eine bessere Verspannung der Elemente (5, 6, 7) sorgen.

Alle genannten Bauteile weisen eine identische axiale zentrale Bohrung (8) auf, sind übereinander gesteckt, und werden durch das Befestigungsmittel (10) zusammengehalten.

Die Abstandelemente (20) haben im Vergleich zu den Elementen (5, 6, 7) einen deutlich kleineren Umfang, bzw. im Falle einer kreisförmigen Ausgestaltung einen deutlich geringeren Radius. Die genannten Bauteile liegen vorzugsweise in runden Scheiben vor, können aber generell auch andere regelmäßig (rechteckig, quadratisch) oder unregelmäßig geformte Scheiben sein.

Entsprechend unterschiedlich geformt, können auch die Massenelemente (3) und die Trägerplatte (2) sein.

Jedes der Lagerelemente (5, 6, 6a, 7) enthält eine Reihe von Bohrungen (25, 26, 27). Die Bohrungen (26) und (27) in dem oberen (7) und unteren (5) Lagerelement dienen dabei nur dazu, um die Verspannungsvorrichtungen (22, 24) auf dem (den) mittleren Lagerelement(en) einfacher mittels von Werkzeugen bedienen zu können. Ebenso weist jedes mittlere Lagerelement (6) zusätzlich zu den Bohrungen (26, 27) eine oder mehrere Bohrungen (25) auf, die dazu dienen, die Befestigungselemente (23), welche nur das obere und untere Lagerelement ver- bzw. vorspannen sollen, durch das mittlere Lagerelement (6) ohne Berührung oder Kraftaufnahme hindurchzuführen.

Jedes der Lagerelemente (5, 6, 6a, 7) besitzt einen im Prinzip einheitlichen Aufbau. Ein äußeres Teil (11, 14, 17), vorzugsweise Ringteil, umschließt ein inneres (12, 15, 18), vorzugsweise ringförmiges Teil, welches die besagte zentrale axiale Bohrung (8) (a - e) aufweist. Beide Teile haben eine zueinander passende konusförmige Begrenzungsfläche. Der innere Teil stellt somit ein Kegelsegment mit einer längeren und einer kürzeren Basis dar. Das Kegelsegment kann dabei unterschiedliche Formen haben, vorzugsweise ist es rund oder elliptisch. Entsprechend rund elliptisch oder anderweitig geformt ist somit auch die innere Konusfläche des angrenzenden äußeren Teils des jeweiligen Lagerelementes.

Die beiden Teile eines jeden Lagerelementes sind über eine entsprechend geformte konusförmige Elastomerschicht (13, 16, 19) miteinander, beispielsweise durch Vulkanisierung, fest verbunden.
An diesen Elastomerschichten erfolgt die eigentliche Dämpfungsarbeit. Diese Elastomerschichten können auch mehrschichtig vorzugsweise zweischichtig sein, wobei in diesen Fällen Zwischenbleche die einzelnen Elastomerschichten voneinander trennen. Die erfindungsgemäßen Elastomerschichten bestehen im wesentlichen aus einem Naturkautschuk, einem Naturkautschukderivat oder aus einem geeigneten elastischen polymeren Kunststoff oder Kunststoffgemisch.

Die Elastomerschichten der einzelnen Lagerelemente können erfindungsgemäß unterschiedliche Härte ("Shore-Härte") und unterschiedliche Dämpfungseigenschaften aufweisen, so dass hierdurch eine weiter individuelle Anpassung an das zu dämpfende Systems in den drei Raumachsen möglich ist. Vorzugsweise werden Elastomere mit einer Härte von 20 bis 100 Shore, insbesondere 30 bis 80 Shore verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt.
Beispiele für geeignete Elastomere sind: Naturkautschuk, Isopren-, Butadien-, Polynorbonen-, Chloropren-, Styrolbutadien-, Butyl-, Äthylenpro-pylen-, Nitril-, Polyurethan-, Acrylat-, Äthylenacrylat, Silicon- oder Fluor- Kautschuke bzw. Kunststoffe.

Wie bereits erwähnt erfolgt an den Elastomerschichten die eigentliche Dämpfungsarbeit. Dabei ist der Konuswinkel der Lagerteile (5, 6, 7) bzw. deren zugehörigen Elastomerschichten (13, 16, 19) von essentieller Bedeutung für die Funktionalität des erfindungsgemäßen Tilgers hinsichtlich seiner Wirkung für alle drei Raumkoordinaten.

Die oberen und unteren Lagerelemente (7) und (5) müssen erfindungsgemäß einen relativ flachen Konuswinkel der Elastomerschichten (13) und (19) besitzen, um eine relativ hohe axiale, bzw. vertikale Steifigkeit zu erhalten. Entsprechend in dieser Richtung wirkende Schwingungskräfte können somit besonders effektiv durch den Federeffekt des Elastomers kompensiert werden. Der Konuswinkel sollte dabei 65° nicht wesentlich überschreiten, wobei der Konuswinkel entsprechend dieser Beschreibung definiert ist als der Winkel, den die konusförmige Begrenzungsfläche der Lagerteile (5) und (7) mit der jeweiligen längeren Basis des Kegelsegmentes des inneren Teils (12), (18) bildet. Vorzugsweise ist ein Konuswinkel von 10 bis 60°, insbesondere 30 bis 50°, bzw. 40 bis 50° zu wählen. Die flachen Elemente (5) und (7) werden in der Vorspannung durch mehr oder weniger starkes Anziehen der Schraube (23), welche sich in den Bohrungen (25) der äußeren Teilen (11, 17) befinden, mehr oder weniger stark gegeneinander verspannt, so dass dadurch eine unterschiedliche axiale Steifigkeit erreicht wird. Natürlich wird durch das Vorspannen über die Teile (5) und (7) auch zwangsläufig die horizontale / radiale Steifigkeit beeinflusst, jedoch im deutlich geringeren Maße als wenn man das steile Element (6) in seiner Vorspannung verändern würde. Die Schraube, bzw. das Befestigungsmittel (23) hat mit dem Außenteil (14) des mittleren Lagerelementes (6) keine Wechselwirkung, sofern die Bohrung (26) im Außenteil (14) des Elementes (6) groß genug gewählt wird. Somit lässt sich zunächst einmal unabhängig von der restlichen Funktion des Dämpfungselementes (1) die axiale Steifigkeit des Elementes hinreichend einstellen.

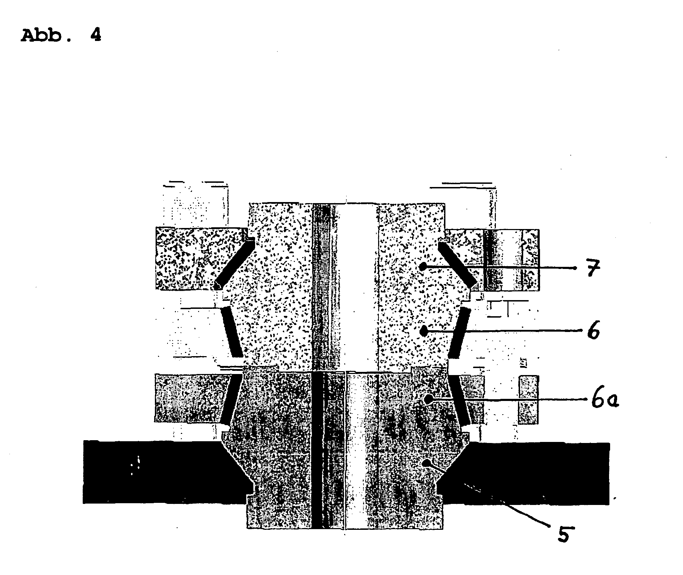

Die mittleren Lagerelemente (6, 6a) müssen erfindungsgemäß einen relativ steilen Konuswinkel der Elastomerschicht (16) besitzen, um eine relativ hohe radiale, bzw. horizontale Steifigkeit zu erhalten.
Entsprechend in dieser Richtung wirkende Schwingungskräfte können somit besonders effektiv durch den Federeffekt des Elastomers kompensiert werden. Der Konuswinkel sollte dabei 70° nicht wesentlich unterschreiten, wobei der Konuswinkel wie oben definiert ist. Vorzugsweise ist ein Konuswinkel von 70 bis 90°, insbesondere 70 bis 80°, bzw. 75 bis 85° zu wählen.
Die steilen Elemente (6), bzw. deren Elastomerschichten (16) werden bei Vorliegen von zwei mittleren Lagerelementen (6) (Fig. 4) in der Vorspannung durch mehr oder weniger starkes Anziehen der Schrauben (22), welche sich in den Bohrungen (26) befinden, mehr oder weniger stark gegeneinander verspannt, so dass dadurch eine unterschiedliche axiale Steifigkeit erreicht wird. Die Verspannung von zwei mittleren Lagerteile (6) führt zu einer Vorspannung, welche im wesentlichen nur eine Änderung der horizontalen / radialen Steifigkeit der betroffenen Elastomerschichten (16) zur Folge hat, ohne dass im wesentlichen die Steifigkeit der Lagerelemente (7), (5) beeinflusst wird.
Enthält das Dämpfungselement (1) nur ein mittleres Lagerelement (6) (Fig. 1 - 3), so erfolgt die Vorspannung des Teils (6) gegenüber dem oberen bzw. unteren Lagerteil. In diesem Fall liefert die Beteiligung der oberen und unteren Elemente (5), (7) einen Beitrag zur axialen / vertikalen Steifigkeit der Elastomerschichten (13, 19),
welcher aber geringer ist, als der Beitrag der horizontalen / radialen Steifigkeit der betreffenden Elastomerschichten (16) des flachen Lagerelementes (6).

Um das Lagerelement (6) nach dem Einstellen fixieren zu können, wird die Gegenklemmschraube (24), welche sich in der Bohrung (27) befindet, gegen die Schraube (22) gekontert. Somit kann bei einem dreiteiligen Bauteil (1) sowohl die horizontale Steifigkeit als auch (im geringeren Maße) die vertikale Steifigkeit exakt eingestellt werden

Von Bedeutung ist weiterhin, dass die oben beschriebenen Funktionen auch bei eingebautem Tilger, also Vorort, eingestellt werden können. Durch entsprechende Werkzeuge die durch die Bohrungen (27), (26) eingebracht werden können, lassen sich die Befestigungselemente für die Lagerelemente (6) verstellen, so dass der Tilger vor der Einstellung bereits fertig montiert und auch an dem zu beruhigenden Bauteil bereits angeschraubt sein kann.

Die wichtigsten Merkmale der Erfindung sind somit zusammengefasst:
- Zwei gegeneinander verspannbare Lagerelemente (5), (7), welche im wesentlichen die vertikale (axiale) Steifigkeit des Systems erzeugen.
- Ein oder mehrere Lagerelemente (6, 6a), welches im wesentlichen die horizontale (radiale) Steifigkeit erzeugen und die ebenso durch stärkere Vorspannung in ihrer Steifigkeit veränderbar sind. Hierbei wird auch ein geringfügiges Verstellen der Steifigkeit des Lagerelementes (5) oder (7) bewirkt, was jedoch keinen störenden Einfluss auf die Einstellbarkeit mit sich bringt.
- Dreiachsig einstellbarer Tilger, bei dem sowohl die Steifigkeit in der Längsachse als auch gleichzeitig in den horizontalen Richtungen einstellbar ist.
- Die Einstellung der horizontalen Richtungen kann in derselben Frequenz, wie in der axialen Richtung oder aber auch in einer anderen Frequenz erfolgen.
- Verwendung unterschiedlicher Elastomermaterialen in den drei Lagerelementen (5, 6, 7) ermöglicht es, dass neben der unterschiedlichen Eigenfrequenz auch ein unterschiedliches Dämpfungsverhalten in den drei Raumachsen erreicht werden kann.
- Einstellbarkeit von Außen, das heißt vor allem durch die dafür vorgesehenen Bohrungen (25, 26, 27) des oberen Lagerelementes (7).
- Bei ellipsoider Bauform der entsprechenden konusförmigen Teile der Lagerelemente (5, 6, 8) ist zusätzlich zu der Einstellbarkeit in drei Achsen auch die Einstellung der Torsionsfrequenz des Systems möglich, womit neben in drei Achsen auftretenden Linearschwingungen auch gleichzeitig auftretende Torsionsschwingungen des Systems beruhigt bzw. eliminiert werden können.
- Der erfindungsgemäße Tilger ist einsetzbar im allgemeinen Maschinenbau, insbesondere für Schwingungen an Getrieben, Motoren, Generatoren, Lagern, bei Hydraulikantrieben, bei Verbrennungskraftmaschinen, insbesondere in Verbindung mit Bedienungselementen, aber auch gegen Schall, Erschütterungen, Schwingungen an Bedienelementen von Maschinen, an Handgriffen von stark schwingenden Maschinen, etc.

## Patentansprüche

1. Tilger mit variabler, einstellbarer, in unterschiedlichen Richtungen wirkender Federsteifigkeit zum Reduzieren oder zur Beseitigung von durch Maschinen oder Bauteilen erzeugten Schwingungen, im wesentlichen bestehend aus einem Dämpfungselement auf Basis eines Elastomers und einer Tilgermasse,
**dadurch gekennzeichnet, dass** das Dämpfungselement (1) im wesentlichen sich zusammensetzt aus
(i) einem oberen, scheibenförmigen elastomeren Lagerelement (7), welches aus einem inneren konusförmigen Teil (18) und einem äußeren hierzu passenden konusförmigen Teil (17) besteht, die zueinander eine gemeinsame konusförmige Begrenzungsfläche aufweisen, über welche sie mittels einer entsprechend geformte Elastomerschicht (19) miteinander fest verbunden sind, wobei der innere Teil (18) eine zentrale axiale Bohrung (8a) aufweist, und der Konuswinkel, der von der konusförmigen Begrenzungsfläche und der längeren Basis des inneren Teils gebildet wird, maximal 60° beträgt.
(ii) einem unteren, scheibenförmigen elastomeren Lagerelement (5), welches aus einem inneren konusförmigen Teil (12) und einem äußeren hierzu passend konusförmigen Teil (11) besteht, die zueinander eine gemeinsame konusförmige Begrenzungsfläche aufweisen, über welche sie mittels einer entsprechend geformte Elastomerschicht (13) miteinander fest verbunden sind, wobei der innere Teil (12) eine zentrale axiale Bohrung (8b) aufweist, und der Konuswinkel, der von der konusförmigen Begrenzungsfläche und der längeren Basis des inneren Teils gebildet wird, maximal 60° beträgt;
(iii) mindestens einem mittleren, scheibenförmigen elastomeren Lagerelement (6), welches zwischen dem oberen und dem unteren Lagerelement platziert ist und aus einem inneren konusförmigen Teil (15) und einem äußeren hierzu passenden konusförmigen Teil (14) besteht, die zueinander eine gemeinsame konusförmige Begrenzungsfläche aufweisen, über welche sie mittels einer entsprechend geformten Elastomerschicht (16) miteinander fest verbunden sind, wobei der innere Teil (15) eine zentrale axiale Bohrung (8c) aufweist, und der Konuswinkel, der von der konusförmigen Begrenzungsfläche und der längeren Basis des inneren Teils gebildet wird, mindestens 65° beträgt; und
(iv) scheibenförmigen Abstandselementen (20), welche ebenfalls eine zentrale axiale Bohrung (8d) aufweisen und zwischen den elastomeren Lagerelementen (7), (5) und (6) angeordnet sind;
wobei die Lagerelemente (5), (6) und (7) Bohrungen (25) zur Aufnahme von Spannmitteln (23) zur Verspannung der äußeren Lagerelemente (5) und (7) sowie Bohrungen (26), (27) zur Aufnahme von Spannmitteln (22), (24) zur Verspannung des oder der mittleren Lagerelemente(s) (6) aufweisen, und zusammen mit den Abstandselementen (20) so angeordnet sind, dass ihre zentralen Bohrungen (8a, b, c, d) zur Anbringung des Dämpfungselementes (1) an das zu dämpfende Bauteil bzw. Maschinenelement eine einheitliche axiale Bohrung (8) zur Aufnahme eines Befestigungsmittels bilden.

2. Tilger nach Anspruch 1, **dadurch gekennzeichnet, dass** die Konusse des oberen und unteren Lagerelementes (5, 7) einen Winkel von 10° bis 60° aufweisen.

3. Tilger nach Anspruch 2, **dadurch gekennzeichnet, dass** die Konusse des oberen und unteren Lagerelementes (5, 7) einen Winkel von 30° bis 50° aufweisen.

4. Tilger nach einem der Ansprüche 1 - 3, **dadurch gekennzeichnet, dass** der Konus des mittleren Lagerelementes (6) einen Winkel von 65° bis 90° aufweist.

5. Tilger nach Anspruch 4, **dadurch gekennzeichnet, dass** der Konus des mittleren Lagerelementes (6) einen Winkel von 70° bis 80° aufweist.

6. Tilger nach Anspruch 1, **dadurch gekennzeichnet, dass** die Konusse des oberen und unteren Lagerelementes (5, 7) einen Winkel von 30° bis 50° aufweisen und der Konus des mittleren Lagerelementes (6) einen Winkel von 70° bis 80° besitzt.

7. Tilger nach einem der Ansprüche 1 bis 6, **dadurch gekennzeichnet, dass** das Dämpfungselement (1) ein mittleres Lagerelement (6) aufweist und die beiden äußeren Lagerelemente (5, 7) durch die in den Bohrungen (25) befindlichen Spannmittel (23) gegeneinander verspannt sind, wobei das mittlere Lagerelemente (6) durch die in den Bohrungen (26) und (27) befindlichen Spannmittel (22) und / oder (24) gegenüber einem und / oder beiden äußeren Lagerelementen (5, 7) verspannt bzw. fixiert ist.

8. Tilger nach einem der Ansprüche 1 bis 6, **dadurch gekennzeichnet, dass** das Dämpfungselement (1) zwei mittlere Lagerelemente (6, 6a) aufweist.

9. Tilger nach Anspruch 8, **dadurch gekennzeichnet, dass** die beiden äußeren Lagerelemente (5, 7) durch die in den Bohrungen (25) befindlichen Spannmittel (23) und die beiden mittleren Lagerelemente (6, 6a) durch die in den Bohrungen (26) befindlichen Spannmittel (22) jeweils gegeneinander verspannt sind.

10. Tilger nach Anspruch 9, **dadurch gekennzeichnet, dass** die Konusse der mittleren Lagerelemente (6, 6a) in X-Form zueinander angeordnet sind

11. Tilger nach einem der Ansprüche 1 bis 10, **dadurch gekennzeichnet, dass** die Konusse der beiden äußeren Lagerelemente (5, 7) in O-Form zueinander angeordnet sind.

12. Tilger nach einem der Ansprüche 1 bis 11, **dadurch gekennzeichnet, dass** die Konuselemente (11, 12, 14, 15, 17, 18) der Lagerelemente Rotationskegel oder Rotationsellipsoide sind.

13. Tilger nach einem der Ansprüche 1 bis 12, **dadurch gekennzeichnet, dass** er eine Massen-Trägerplatte (2) aufweist, welche an eines der beiden Lagerelemente (5, 7) befestigt ist.

14. Tilger nach Anspruch 13, **dadurch gekennzeichnet, dass** an der Massen-Trägerplatte (2) Tilgermassenelemente (3) mittels Befestigungsmitteln (4) angebracht sind.

15. Verwendung des Tilgers gemäß einem oder mehreren der Ansprüche 1-14 zur Dämpfung von in drei Raumachsen auftretenden Schwingungen in Maschinen und Windkraftanlagen.

## Claims

1. Absorber having variable, adjustable spring stiffness acting in various directions for reducing or eliminating vibrations generated by machines or components, essentially consisting of a damping element based on an elastomer and an absorber mass,
**characterized in that** the damping element (1) is essentially composed of
(i) an upper, disc-shaped, elastomeric bearing element (7), which consists of an inner, conical part (18) and an outer, matching conical part (17), which have a common, conical delimiting surface facing one another, via which they are firmly connected to one another by means of a correspondingly shaped elastomer layer (19), where the inner part (18) has a central axial hole (8a), and the cone angle formed by the conical delimiting surface and the longer base of the inner part is a maximum of 60°;
(ii) a lower, disc-shaped, elastomeric bearing element (5), which consists of an inner, conical part (12) and an outer, matching conical part (11), which have a common, conical delimiting surface facing one another, via which they are firmly connected to one another by means of a correspondingly shaped elastomer layer (13), where the inner part (12) has a central axial hole (8b), and the cone angle formed by the conical delimiting surface and the longer base of the inner part is a maximum of 60°;
(iii) at least one central, disc-shaped, elastomeric bearing element (6), which is placed between the upper and lower bearing elements and consists of an inner, conical part (15) and an outer, matching conical part (14), which have a common, conical delimiting surface facing one another, via which they are firmly connected to one another by means of a correspondingly shaped elastomer layer (16), where the inner part (15) has a central axial hole (8c), and the cone angle formed by the conical delimiting surface and the longer base of the inner part is at least 65°; and
(iv) disc-shaped spacer elements (20), which likewise have a central axial hole (8d) and are arranged between the elastomeric bearing elements (7), (5) and (6);
where the bearing elements (5), (6) and (7) have holes (25) for the accommodation of tensioning means (23) for tensioning the outer bearing elements (5) and (7) and holes (26), (27) for the accommodation of tensioning means (22), (24) for tensioning the central bearing element(s) (6), and are arranged together with the spacer elements (20) in such a way that their central holes (8a, b, c, d) form a uniform axial hole (8) for the accommodation of an attachment means for the attachment of the damping element (1) to the component or machine element to be damped.

2. Absorber according to Claim 1, **characterized in that** the cones of the upper and lower bearing elements (5, 7) have an angle of 10° to 60°.

3. Absorber according to Claim 2, **characterized in that** the cones of the upper and lower bearing elements (5, 7) have an angle of 30° to 50°.

4. Absorber according to one of Claims 1 - 3, **characterized in that** the cone of the central bearing element (6) has an angle of 65° to 90°.

5. Absorber according to Claim 4, **characterized in that** the cone of the central bearing element (6) has an angle of 70° to 80°.

6. Absorber according to Claim 1, **characterized in that** the cones of the upper and lower bearing elements (5, 7) have an angle of 30° to 50°, and the cone of the central bearing element (6) has an angle of 70° to 80°.

7. Absorber according to one of Claims 1 to 6, **characterized in that** the damping element (1) has a central bearing element (6), and the two outer bearing elements (5, 7) are tensioned against one another by the tensioning means (23) located in the holes (25), where the central bearing element (6) is tensioned against or fixed to one and/or both outer bearing elements (5, 7) by the tensioning means (22) and/or (24) located in the holes (26) and (27).

8. Absorber according to one of Claims 1 to 6, **characterized in that** the damping element (1) has two central bearing elements (6, 6a).

9. Absorber according to Claim 8, **characterized in that** the two outer bearing elements (5, 7) are tensioned against one another by the tensioning means (23) located in the holes (25), and the two central bearing elements (6, 6a) are tensioned against one another by the tensioning means (22) located in the holes (26).

10. Absorber according to Claim 9, **characterized in that** the cones of the central bearing elements (6, 6a) are arranged in an X shape to one another.

11. Absorber according to one of Claims 1 to 10, **characterized in that** the cones of the two outer bearing elements (5, 7) are arranged in an O shape to one another.

12. Absorber according to one of Claims 1 to 11, **characterized in that** the cone elements (11, 12, 14, 15, 17, 18) of the bearing elements are rotational cones or rotational ellipsoids.

13. Absorber according to one of Claims 1 to 12, **characterized in that** it has a mass support plate (2), which is attached to one of the two bearing elements (5, 7).

14. Absorber according to Claim 13, **characterized in that** absorber mass elements (3) are attached to the mass support plate (2) by means of attachment means (4).

15. Use of the absorber according to one or more of Claims 1 - 14 for damping vibrations occurring in three spatial axes in machines and wind turbines.

## Revendications

1. Absorbeur présentant une raideur élastique variable réglable opérant dans diverses directions pour réduire ou éliminer des vibrations générées par des machines ou des components, essentiellement constitué par un élément d'amortissement basé sur un élastomère et une masse absorbeuse,
**caractérisé en ce que** l'élément d'amortissement (1) est essentiellement constitué par
(i) un élément de support élastomérique en forme de disque supérieur (7), lequel est constitué par une partie conique interne (18) et par une partie conique conjuguée externe (17), lesquelles comportent une surface de délimitation conique commune en se faisant face l'une l'autre, via laquelle elles sont fermement connectées l'une à l'autre au moyen d'une couche élastomérique conformée en correspondance (19), dans lequel la partie interne (18) comporte un trou axial central (8a), et l'angle de cône formé par la surface de délimitation conique et par la base plus longue de la partie interne est au maximum de 60°;
(ii) un élément de support élastomérique en forme de disque inférieur (5), lequel est constitué par une partie conique interne (12) et par une partie conique conjuguée externe (11), lesquelles comportent une surface de délimitation conique commune en se faisant face l'une l'autre, via laquelle elles sont fermement connectées l'une à l'autre au moyen d'une couche élastomérique conformée en correspondance (13), dans lequel la partie interne (12) comporte un trou axial central (8b), et l'angle de cône formé par la surface de délimitation conique et par la base plus longue de la partie interne est au maximum de 60°;
(iii) au moins un élément de support élastomérique en forme de disque central (6), lequel est placé entre les éléments de support supérieur et inférieur et est constitué par une partie conique interne (15) et par une partie conique conjuguée externe (14), lesquelles comportent une surface de délimitation conique commune en se faisant face l'une l'autre, via laquelle elles sont fermement connectées l'une à l'autre au moyen d'une couche élastomérique conformée en correspondance (16), dans lequel la partie interne (15) comporte un trou axial central (8c), et l'angle de cône formé par la surface de délimitation conique et par la base plus longue de la partie interne est d'au moins 65°; et
(iv) des éléments d'espaceur en forme de disque (20), qui pareillement comportent un trou axial central (8d) et sont agencés entre les éléments de support élastomériques (7), (5) et (6);
dans lequel les éléments de support (5), (6) et (7) comportent des trous (25) pour le logement d'un moyen de tension (23) pour mettre sous tension les éléments de support externes (5) et (7) et des trous (26), (27) pour le logement d'un moyen de tension (22), (24) pour mettre sous tension l'élément/les éléments de support central/centraux (6), et sont agencés en association avec les éléments d'espaceur (20) de telle sorte que leurs trous centraux (8a, b, c, d) forment un trou axial uniforme (8) pour le logement d'un moyen de fixation pour la fixation de l'élément d'amortissement (1) sur l'élément de composant ou de machine à amortir.

2. Absorbeur selon la revendication 1, **caractérisé en ce que** les cônes des éléments de support supérieur et inférieur (5, 7) présentent un angle de 10° à 60°.

3. Absorbeur selon la revendication 2, **caractérisé en ce que** les cônes des éléments de support supérieur et inférieur (5, 7) présentent un angle de 30° à 50°.

4. Absorbeur selon l'une des revendications 1 - 3, **caractérisé en ce que** le cône de l'élément de support central (6) présente un angle de 65° à 90°.

5. Absorbeur selon la revendication 4, **caractérisé en ce que** le cône de l'élément de support central (6) présente un angle de 70° à 80°.

6. Absorbeur selon la revendication 1, **caractérisé en ce que** les cônes des éléments de support supérieur et inférieur (5, 7) présentent un angle de 30° à 50°, et le cône de l'élément de support central (6) présente un angle de 70° à 80°.

7. Absorbeur selon l'une des revendications 1 à 6, **caractérisé en ce que** l'élément d'amortissement (1) comporte un élément de support central (6), et les deux éléments de support externes (5, 7) sont mis sous tension l'un contre l'autre par le moyen de tension (23) localisé dans les trous (25), dans lequel l'élément de support central (6) est mis sous tension contre ou fixé sur l'un et/ou les deux éléments de support externes (5, 7) par le moyen de tension (22) et/ou (24) localisé dans les trous (26) et (27).

8. Absorbeur selon l'une des revendications 1 à 6, **caractérisé en ce que** l'élément d'amortissement (1) comporte deux éléments de support centraux (6, 6a).

9. Absorbeur selon la revendication 8, **caractérisé en ce que** les deux éléments de support externes (5, 7) sont mis sous tension l'un contre l'autre par le moyen de tension (23) localisé dans les trous (25), et les deux éléments de support centraux (6, 6a) sont mis sous tension l'un contre l'autre par le moyen de tension (22) localisé dans les trous (26).

10. Absorbeur selon la revendication 9, **caractérisé en ce que** les cônes des éléments de support centraux (6, 6a) sont agencés selon une forme de X l'un par rapport à l'autre.

11. Absorbeur selon l'une des revendications 1 à 10, **caractérisé en ce que** les cônes des deux éléments de support externes (5, 7) sont agencés selon une forme de O l'un par rapport à l'autre.

12. Absorbeur selon l'une des revendications 1 à 11, **caractérisé en ce que** les éléments de cône (11, 12, 14, 15, 17, 18) des éléments de support sont des cônes de révolution ou des ellipsoïdes de révolution.

13. Absorbeur selon l'une des revendications 1 à 12, **caractérisé en ce qu'**il comporte une plaque de support de masse (2), laquelle est fixée à l'un des deux éléments de support (5, 7).

14. Absorbeur selon la revendication 13, **caractérisé en ce que** des éléments de masse d'absorbeur (3) sont fixés à la plaque de support de masse (2) au moyen d'un moyen de fixation (4).

15. Utilisation de l'absorbeur selon une ou plusieurs des revendications 1-14 pour amortir des vibrations survenant dans trois axes spatiaux dans des machines et des éoliennes.
